# FASCICULE DE BREVET EUROPEEN

(11) **EP 0 951 811 B1**
(45) Date de publication et mention de la délivrance du brevet: **05.11.2003**
(21) Numéro de dépôt: 99440074.5
(22) Date de dépôt: 16.04.1999
(51) Int. Cl.: A01B 15/14, A01B 3/46

(54) **Charrue à largeur de travail variable**
Pflug mit variabler Schnittbreite
Variable working width plough

(30) Priorité: 22.04.1998 FR 9852099
(43) Date de publication de la demande: 27.10.1999
(73) Titulaire: Kuhn-Huard S.A., 44142 Chateaubriant (FR)
(72) Inventeur: Perret, Louis, 44110 Chateaubriant (FR); Paugam, Denis, 44700 Orvault (FR)
(74) Mandataire: Andres, Jean-Claude

(56) Documents cités:
- EP-A- 0 562 176
- WO-A-96/26633
- WO-A-97/28677
- DE-U- 29 607 607

## Description

La présente invention se rapporte au domaine technique général des charrues semi-portées ou tractées, présentant un châssis en deux parties. Ce type de charrue présente également une partie intermédiaire liant les deux parties de châssis à l'aide d'articulations et comportant au moins une roue d'appui ou un chariot.

Il est souvent utile, voire indispensable, d'agir sur l'orientation des parties du châssis par rapport à la partie intermédiaire pour procéder au réglage de la largeur de travail de la charrue.

On connaît déjà un tel type de charrue semi-portée ou tractée à largeur de travail variable comportant
- un châssis constitué d'une partie de châssis avant et d'une partie de châssis arrière sur lesquelles sont montés des corps de labour,
- une partie intermédiaire articulée entre les parties de châssis avant et arrière associée à au moins une roue d'appui,
- des moyens de réglage pour ajuster l'orientation des parties de châssis avant et arrière par rapport à la partie intermédiaire, lesdits moyens de réglage comportant un organe mobile monté sur la partie intermédiaire et relié à la partie de châssis arrière avec une seconde bielle,
- et des moyens de modification de l'orientation des corps de labour vis-à-vis de la partie de châssis correspondante.

Le document EP-A-0 562 176 décrit en effet une telle charrue comportant un châssis en deux parties, ainsi qu'une partie intermédiaire montée sur un chariot et supportant des moyens destinés au réglage de différentes largeurs de labour, tels qu'une tringlerie associée à un ou plusieurs vérins. Dans les réalisations décrites, lesdits moyens s'étendent en dehors de la partie intermédiaire, ce qui présente plusieurs inconvénients tant au niveau sécurité, qu'au niveau stylique etc. En outre les vérins de commande ou les moyens de réglage risquent de subir des contraintes importantes lors du travail ou du transport de la charrue.

L'objet de la présente invention vise donc à réaliser une charrue avec des moyens de réglage de l'orientation des parties du châssis, qui soient aptes à bien encaisser les contraintes mécaniques exercées sur lesdits moyens de réglage, et ce afin d'augmenter leur tenue dans le temps, notamment en réduisant le risque de flambage.

L'objet assigné à la présente invention est atteint à l'aide d'une charrue semi-portée ou tractée à largeur de travail variable comportant :
- un châssis constitué d'une partie de châssis avant et d'une partie de châssis arrière sur lesquelles sont montés des corps de labour,
- une partie intermédiaire articulée entre les parties de châssis avant et arrière associée à au moins une roue d'appui,
- des moyens de réglage pour ajuster l'orientation des parties de châssis avant et arrière par rapport à la partie intermédiaire, lesdits moyens de réglage comportant un organe mobile monté sur la partie intermédiaire et relié à la partie de châssis arrière avec une seconde bielle,
- et des moyens de modification de l'orientation des corps de labour vis-à-vis de la partie de châssis correspondante,
caractérisée en ce que les moyens de réglage comprennent une première bielle reliant la partie de châssis avant à l'organe mobile dont l'actionnement direct ou indirect permet de déplacer lesdites parties de châssis avant et arrière.

Dans une réalisation avantageuse de la charrue conforme à l'invention, l'organe mobile est constitué d'une pièce pivotante articulée sur la partie intermédiaire.

Dans une autre réalisation avantageuse de la charrue conforme à l'invention, l'organe mobile est constitué par un piston d'un vérin hydraulique.

Avantageusement l'organe mobile est actionné sous l'effet d'un vérin hydraulique. Ce dernier peut alors être articulé entre la partie intermédiaire et l'organe mobile. Alternativement le vérin hydraulique peut également être articulé entre la partie intermédiaire et la partie avant ou arrière du châssis.

Dans une réalisation avantageuse, chaque partie du châssis comporte une tige pour réaliser un guidage par parallélogramme des corps de labour sous l'effet d'un moyen de commande, ladite tige et ledit moyen de commande constituant ainsi les moyens de modification de l'orientation desdits corps de labour.

En outre chaque tige peut être reliée à la partie intermédiaire via une bielle complémentaire, permettant ainsi d'ajuster automatiquement l'orientation des corps de labour, simultanément à un pivotement des parties de châssis avant et arrière vis-à-vis de la partie intermédiaire.

Un objet additionnel de la présente invention vise à réaliser une charrue dont les moyens de réglage supportés par la partie intermédiaire liant les deux parties de châssis, sont implantés sur ladite partie intermédiaire de manière à obtenir notamment une plus grande sécurité et une meilleure stylique. A cet effet, la charrue conforme à l'invention est également remarquable dans la mesure où les moyens de réglage sont montés au moins partiellement à l'intérieur de la partie intermédiaire.

D'autres caractéristiques et avantages ressortiront à la lecture de la description détaillée, donnée ci-après, en référence aux dessins annexés à titre d'exemples non limitatifs et dans lesquels :
- la figure 1 représente une vue globale de dessus d'une charrue conforme à l'invention,
- la figure 2 représente une vue de dessus partielle d'un premier exemple de réalisation d'une charrue conforme à l'invention,
- la figure 3 et la figure 4 représentent la charrue de la figure 2 avec des réglages différents de la largeur de travail,
- la figure 5 représente une vue de dessus partielle d'un second exemple de réalisation d'une charrue conforme à l'invention,
- la figure 6 représente une vue de dessus partielle d'un troisième exemple de réalisation d'une charrue conforme à l'invention,
- la figure 7 représente une vue de dessus partielle d'un quatrième exemple de réalisation d'une charrue conforme à l'invention,
- la figure 8 représente une vue de dessus d'un cinquième exemple de réalisation d'une charrue conforme à l'invention.

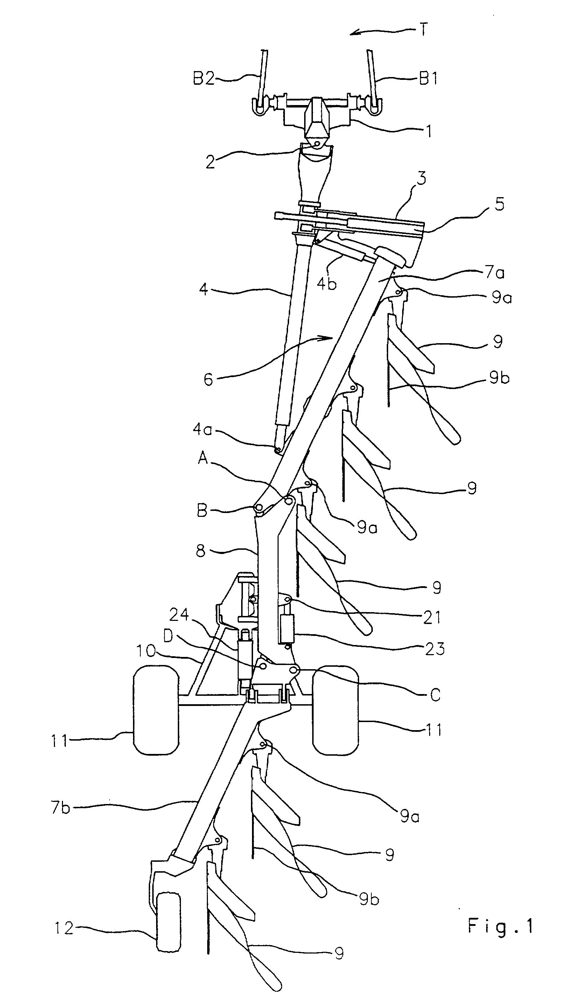

La charrue représentée à la figure 1 est attelée à un tracteur (T) uniquement représenté par les deux bielles inférieures (B1, B2) de son attelage.

La charrue comprend un avant-train (1) destiné à être attelé aux deux bras inférieurs (B1, B2) du tracteur (T) et raccordé via une articulation verticale (2), à un arrière-train (3). L'arrière-train (3) se compose globalement d'un timon (4), d'un châssis (6) en deux parties (7a, 7b) capables de pivoter par rapport à l'axe matérialisé par le timon (4), sous l'action d'un mécanisme de retournement (5) pour une charrue réversible. Les parties de châssis avant (7a) et arrière (7b) sont reliées par une partie intermédiaire (8), et supportent des corps de labour (9). La partie intermédiaire (8) est supportée par un chariot (10) pourvu de deux roues (11). La partie de châssis avant (7a) est articulée sur le timon (4) à l'aide d'une articulation (4a) de manière à autoriser un repliage et un dépliage du châssis (6) par rapport au timon (4). Un mécanisme (4b) de repliage et de dépliage, prévu à cet effet, permet de positionner le premier corps de labour (9) au mieux par rapport au tracteur.

Les parties de châssis avant (7a) et arrière (7b) sont respectivement liées à la partie intermédiaire (8) à l'aide d'articulations (A) et (C). Ces dernières sont de préférence cylindriques.

Les corps de labour (9) sont articulés sur les parties de châssis avant (7a) et arrière (7b), grâce à des articulations (9a). La partie arrière (7b) est en outre pourvue, à son extrémité libre, d'une roue de jauge (12).

La charrue conforme à l'invention est ainsi semi-portée ou tractée.

La charrue conforme à l'invention comporte par ailleurs des moyens de réglage pour ajuster l'orientation des parties de châssis avant (7a) et arrière (7b) par rapport à la partie intermédiaire (8).

La charrue conforme à l'invention comporte également des moyens de modification de l'orientation des corps de labour (9), vis-à-vis de la partie de châssis (7a ; 7b) correspondante sur laquelle ils sont articulés. Les corps de labour (9) présentent donc des contre-seps (9b) alignés selon une direction optimale correspondant à la direction d'avance et de traction de la charrue lors du travail.

Le pivotement des parties de châssis avant (7a) et arrière (7b) et l'orientation adéquate des corps de labour (9) sont obtenus par exemple à l'aide d'un vérin hydraulique complémentaire (23). Avantageusement, ces deux réglages sont effectués simultanément.

Les parties de châssis avant (7a), arrière (7b) et intermédiaire (8) sont de préférence creuses de manière à contenir au moins partiellement les divers éléments nécessaires au réglage de la largeur de travail de la charrue. Ces éléments sont ainsi bien intégrés dans le volume interne des parties de châssis (7a ; 7b) et de la partie intermédiaire (8).

Dans la suite de la description, lorsque l'on passe d'un mode de réalisation conforme à l'invention à un autre, les pièces ou éléments équivalents ayant subi modification, soit dans leur structure, soit dans leur agencement, conservent la même dénomination, mais sont affectés d'une référence augmentée d'un multiple du chiffre 100. Les autres références demeurent inchangées.

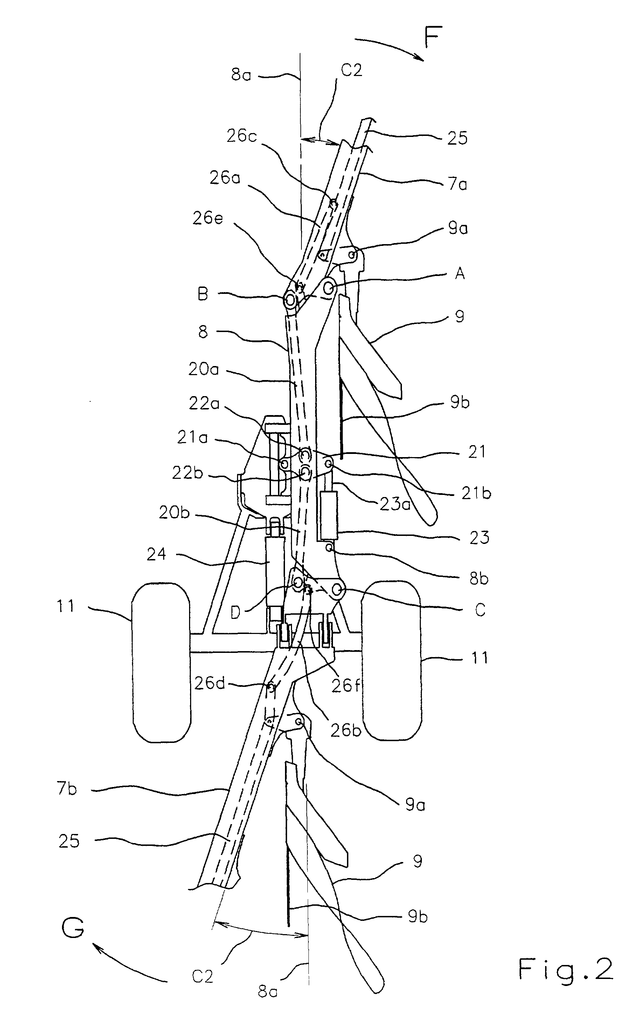

La figure 2 représente un premier exemple de réalisation d'une charrue conforme à l'invention.

Les moyens pour ajuster l'orientation des parties de châssis avant (7a) et arrière (7b) comprennent une première bielle (20a) et une seconde bielle (20b) reliant respectivement la partie de châssis avant (7a) et la partie de châssis arrière (7b) à un organe mobile (21).

La liaison entre la partie de châssis avant (7a) et la première bielle (20a) respectivement entre la partie arrière (7b) et la seconde bielle (20b) est obtenue à l'aide d'une articulation (B) respectivement d'une articulation (D).

La liaison entre la première bielle (20a) et l'organe mobile (21) respectivement entre la seconde bielle (20b) et l'organe mobile (21) est réalisée avec une articulation (22a) respectivement avec une articulation (22b) distincte de l'articulation (22a).

L'organe mobile (21) est avantageusement articulé sur la partie intermédiaire (8) en un point d'articulation (21a) localisé à l'une de ses extrémités, par exemple à l'extérieur de la partie intermédiaire (8). L'autre extrémité dudit organe mobile (21) fait avantageusement saillie hors de la partie intermédiaire (8) et comporte une articulation (21b) à laquelle est lié un piston (23a) du vérin hydraulique (23). La partie intermédiaire (8) comporte à cet effet des ouvertures adéquates (non représentées). Le vérin hydraulique (23) également lié, à l'aide d'une articulation (8b), à la partie intermédiaire (8), laquelle présente une configuration telle que l'encombrement de ladite partie intermédiaire (8) associé à l'organe mobile (21) et au vérin hydraulique (23), reste faible. Ceci est appréciable dans la mesure où suivant certains réglages de la charrue, le corps de labour (9) de la partie de châssis avant (7a) situé dans le voisinage de la partie intermédiaire (8) et plus particulièrement le contre-sep (9b) de celui-ci se rapproche de la partie intermédiaire (8). Le pivotement des parties de châssis avant (7a) et arrière (7b) est obtenu par déplacement du piston (23a). La force nécessaire pour une telle opération de réglage reste acceptable dans la mesure où le pivotement autour de l'articulation (A) ou (C) est commandé à travers le bras de leviers (A - B) ou (C - D) et le bras de levier (21a - 22a) ou (21a - 22b) défini par l'écartement entre les articulations (21a et 22a) ou (21a et 22b).

L'actionnement ou le déplacement de l'organe mobile (21) provoque donc une inclinaison plus ou moins accentuée, selon le réglage souhaité, des parties de châssis avant (7a) et arrière (7b) par rapport à une génératrice fictive (8a) alignée avec la partie intermédiaire (8). En effet, lorsque le piston (23a) du vérin hydraulique (23) se déplace vers l'avant de la charrue, la première bielle (20a) fait pivoter la partie de châssis avant (7a) autour de l'articulation (A) dans le sens de la flèche (F). Ce pivotement est facilité par l'existence d'un bras de levier (A - B) correspondant à l'écartement entre les articulations (A) et (B). Simultanément la partie de châssis arrière (7b) pivote autour de l'articulation (C) dans le sens de la flèche (G). Le bras de levier (C - D) permet également de faciliter le mouvement de la partie arrière (7b). Les écartements entre les articulations (A, B) respectivement (C, D) sont choisis pour réduire les contraintes mécaniques exercées notamment sur les bielles (20a, 20b).

Un chariot (10) comportant des roues (11) est également muni de façon connue d'un vérin de levage (24) susceptible de déplacer l'arrière-train (3) de la charrue entre une position basse de labour et une position haute de transport, et vice versa.

Chaque partie de châssis (7a ; 7b) comporte, en outre, une tige (25) pour réaliser un guidage par parallélogramme des corps de labour (9). Chaque tige (25) s'étend, de préférence, à l'intérieur de la partie de châssis (7a ; 7b) correspondante. La liaison entre la tige (25) de la partie de châssis avant (7a) et la partie intermédiaire (8) respectivement entre la tige (25) de la partie de châssis arrière (7b) et la partie intermédiaire (8) est réalisée par une bielle complémentaire (26a) respectivement par une bielle complémentaire (26b). Ces bielles complémentaires (26a, 26b) sont articulées sur la tige (25) correspondante respectivement sur la partie intermédiaire (8) en (26c, 26d) respectivement en (26e, 26f).

Ces bielles complémentaires (26a, 26b) et les tiges (25) correspondantes constituent ainsi les moyens de modification de l'orientation desdits corps de labour (9). Ces derniers sont alors pivotés autour de leur articulation respective (9a) sur la partie de châssis (7a ; 7b) correspondante.

Selon un autre exemple de réalisation, le moyen de commande peut également être constitué d'un vérin hydraulique ou d'un manchon réglable, par exemple pour actionner l'organe mobile (21). L'orientation des corps de labour (9) et l'orientation des parties de châssis (7a ; 7b) se font ainsi automatiquement avec une unique opération de réglage.

Dans l'exemple de réalisation de la figure 2, on voit que toutes les pièces et éléments nécessaires au réglage de la charrue sont conçus de manière à être intégrés, au moins partiellement à l'intérieur des poutres constitutives des parties de châssis avant (7a), arrière (7b) et de la partie intermédiaire (8).

Sur la figure 2, la charrue se trouve dans une position de réglage correspondant au réglage de la largeur de travail moyenne (par exemple 16 pouces). La génératrice (8a) fait un angle (C2) avec les parties de châssis avant (7a) et arrière (7b). Cet angle (C2) est obtenu grâce à une course médiane du piston (23a) du vérin hydraulique (23).

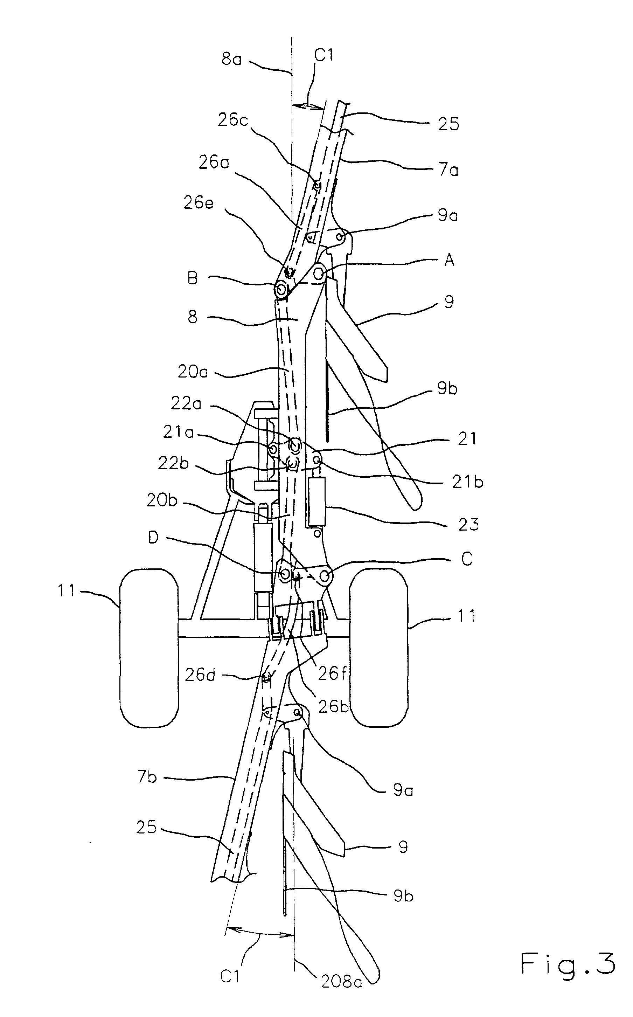

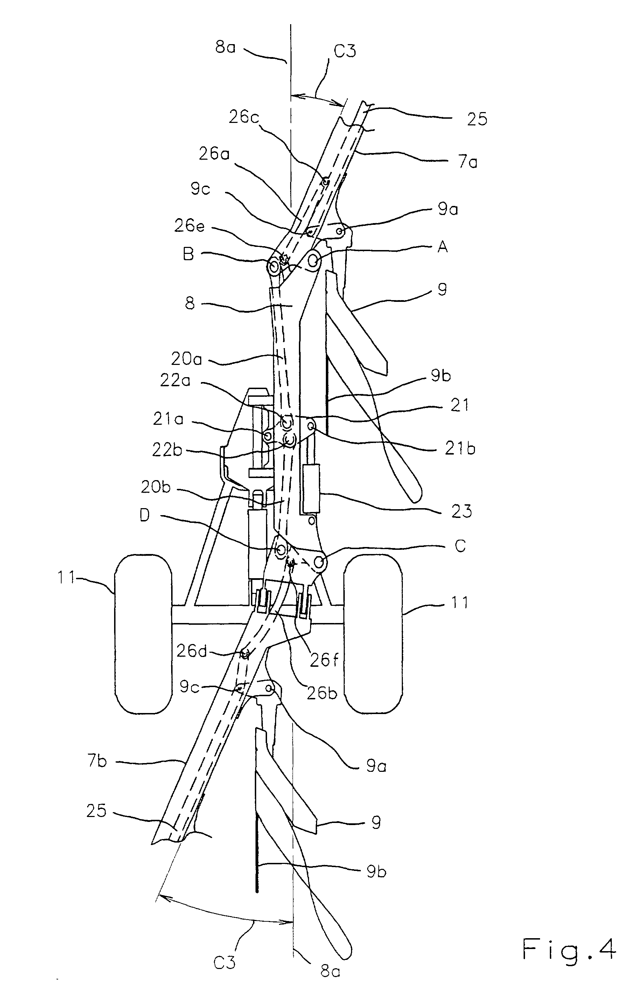

Sur la figure 3, la charrue selon le premier exemple de réalisation se trouve dans une position de réglage correspondant au réglage de la largeur de travail minimale (par exemple 12 pouces). La génératrice (8a) fait ici un angle (C1) avec les parties de châssis avant (7a) et arrière (7b) plus faible que l'angle (C2). Cet angle (C1) est obtenu grâce à un raccourcissement maximal au vérin hydraulique (23) correspondant à une course minimale du piston (23a). Sur la figure 4, la charrue selon le premier exemple de réalisation se trouve dans une position de réglage correspondant au réglage de la largeur de travail maximale (par exemple 20 pouces). La génératrice (8a) fait ici un angle (C3) avec les parties de châssis avant (7a) et arrière (7b) plus grand que l'angle (C2). Cet angle (C3) est obtenu grâce à un allongement maximal du vérin hydraulique (23), correspondant à une course maximale du piston (23a). L'inclinaison de la partie de châssis avant (7a) est, en partant de la position médiane, plus faible respectivement plus forte grâce à une traction respectivement une poussée exercée sur la première bielle (20a). Le déplacement de la tige (25) de la partie de châssis avant (7a) est provoqué par la bielle complémentaire (26a) dont l'une des extrémités est liée à la partie intermédiaire (8) grâce à l'articulation (26c). Le pivotement de la partie de châssis avant (7a) est donc simultané au déplacement de la tige (25) et, par conséquent, au pivotement des corps de labour (9) correspondants autour de leur articulation (9a) respective. Le pivotement des corps de labour (9) se fait de manière à conserver un alignement, pour tout réglage, entre leurs contre-seps (9b) et la direction de traction matérialisée par la génératrice (8a). Le réglage de la partie de châssis arrière (7b) est obtenu simultanément. L'inclinaison de la partie de châssis arrière (7b) est, en partant de la position médiane plus faible respectivement plus forte grâce à une poussée respectivement une traction exercée sur la seconde bielle (20b). Le déplacement de la tige (25) de la partie de châssis arrière (7b), est provoqué par la bielle complémentaire (26b) dont l'une des extrémités est liée à la partie intermédiaire (8) grâce à l'articulation (26f). Le pivotement de la partie de châssis arrière (7b) est donc également simultané au déplacement de la tige (25) et, par conséquent, au pivotement des corps de labour (9) correspondants autour de leur articulation (9a) respective. Le pivotement de ces corps de labour (9) se fait, là aussi, de manière à conserver un alignement, pour tout réglage, entre leurs contre-seps (9b) et la direction de traction.

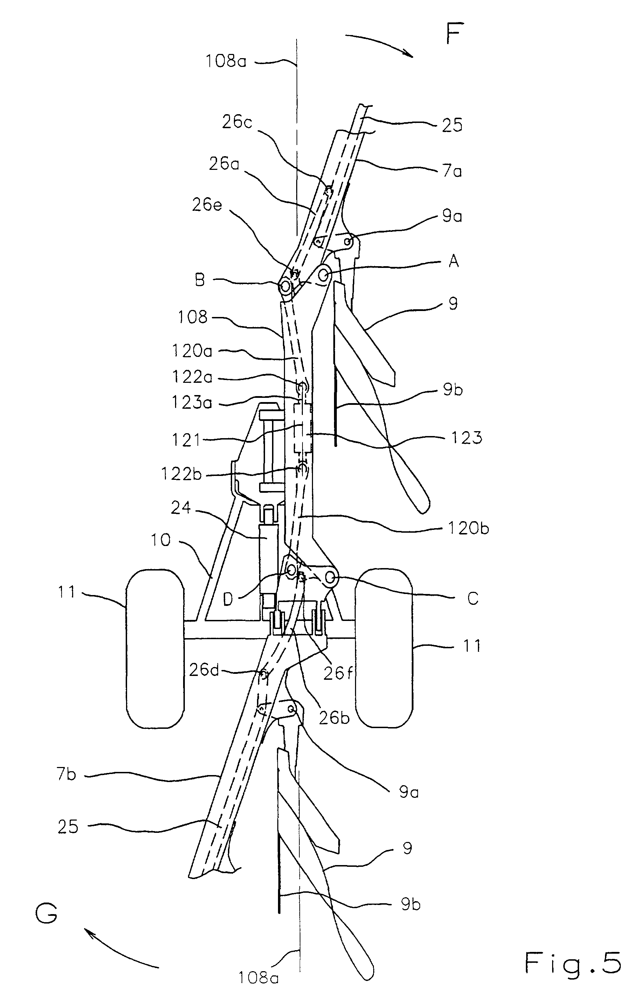

La figure 5 représente un second exemple de réalisation de la charrue conforme à l'invention.

Les moyens pour ajuster l'orientation des parties de châssis avant (7a) et arrière (7b) comprennent ici une première bielle (120a) et une seconde bielle (120b) reliant respectivement la partie de châssis avant (7a) et la partie de châssis arrière (7b) à un organe mobile (121).

Les liaisons entre les parties de châssis (7a ; 7b) et la première bielle (120a) et la seconde bielle (120b) sont obtenues respectivement à l'aide d'articulations (B) et (D). L'autre extrémité de la première bielle (120a) et de la seconde bielle (120b) est articulée en (122a) et (122b) sur un piston (123a) mobile.

L'organe mobile (121) est constitué par le piston (123a) à double tige d'un vérin hydraulique (123). Ce dernier est fixé dans la partie intermédiaire (108) par tous moyens, et l'organe mobile (121), en l'occurrence le piston (123a) du vérin (123), se déplace par translation. L'actionnement ou le déplacement de l'organe mobile (121) provoque donc une inclinaison plus ou moins accentuée, selon le réglage souhaité, des parties de châssis avant et arrière (7a ; 7b) par rapport à une génératrice fictive (108a) alignée avec la partie intermédiaire (108).

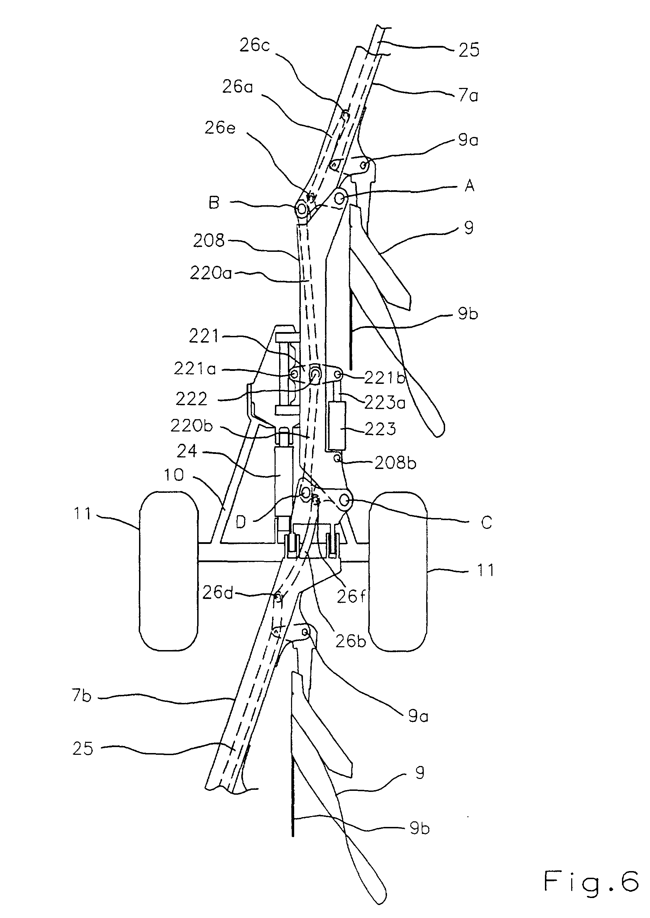

La figure 6 représente un troisième exemple de réalisation d'une charrue conforme à l'invention, dans laquelle la première bielle (220a) et la seconde bielle (220b) sont liées à une articulation (222) commune de l'organe mobile (221). Ce dernier est articulé sur la partie intermédiaire (208) en un point d'articulation (221a) localisé à l'une des extrémités de l'organe mobile (221) et à l'extérieur de ladite partie intermédiaire (208). L'autre extrémité dudit organe mobile (221) fait avantageusement saillie hors de la partie intermédiaire (208) et comporte une articulation (221b) à laquelle est lié le piston (223a) du vérin hydraulique (223). La partie intermédiaire (208) comporte à cet effet des ouvertures adéquates (non représentées).

Le pivotement des parties de châssis avant (7a) et arrière (7b) est obtenu par déplacement du piston (223a). La force nécessaire pour une telle opération de réglage reste acceptable dans la mesure où le pivotement autour de l'articulation (A) ou (C) est commandé à travers le bras de leviers (A - B) ou (C - D) et le bras de levier (221a - 222) défini par l'écartement entre les articulations (221a) et (222).

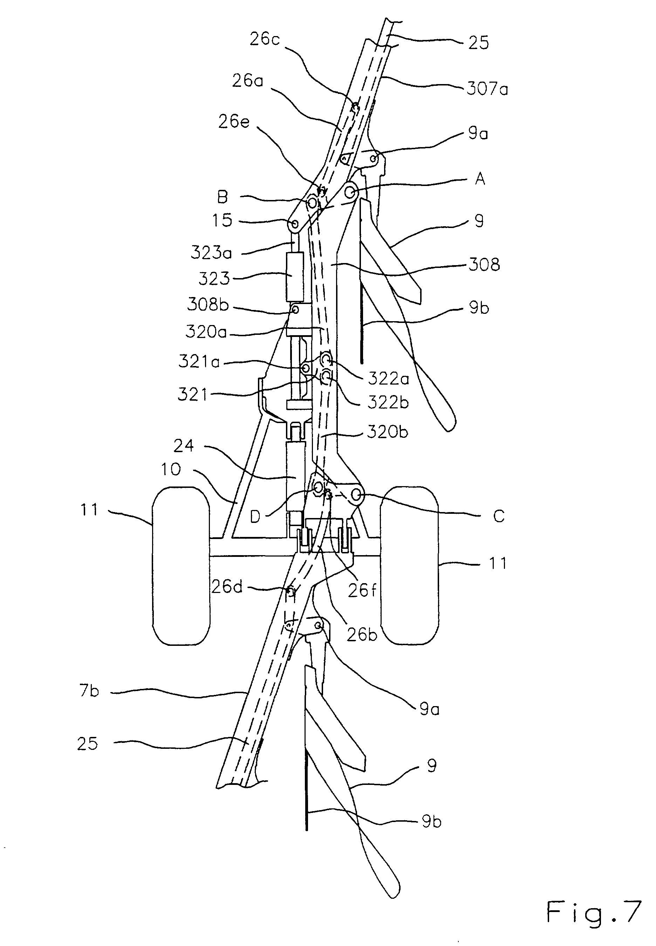

La charrue selon le quatrième exemple de réalisation représentée à la figure 7 présente une partie intermédiaire (308) sensiblement modifiée. Les parties de châssis (307a) avant et arrière (307b) sont liées à l'organe mobile (321) à l'aide de la première bielle (320a) et de la seconde bielle (320b). Le vérin hydraulique (323) est monté entre la partie intermédiaire (308) en un point d'articulation (308b) et une extrémité de la partie de châssis avant (307a) en un point d'articulation (15).

Le piston (323a) du vérin (323) déplace la partie de châssis avant (307a) par pivotement autour du point d'articulation (A). Un tel mouvement est transmis à la partie de châssis arrière (7b) par l'intermédiaire des bielles (320a, 320b) liées à l'organe mobile (321). Ce dernier est donc actionné indirectement par le vérin hydraulique (323). L'organe mobile (321) est de préférence intégré au mieux dans le volume interne de la partie intermédiaire (308). L'organe mobile (321) présente une extrémité, pourvue du point d'articulation (321a), faisant saillie hors de la partie intermédiaire (308). Cette dernière présente une ouverture adaptée (non représentée). En outre, le positionnement du vérin hydraulique (323) ne risque pas de gêner le débattement du contre-sep (9b) du corps de labour (9) de la partie de châssis avant (307a) situé dans le voisinage de la partie intermédiaire (308), lorsque ledit contre-sep (9a) se rapproche de la partie intermédiaire (308) pour certains réglages. En effet, le vérin hydraulique (323) est localisé, en vue de dessus, à gauche de la partie intermédiaire (308), alors que la zone de débattement dudit contre-sep (9b) est localisée à droite de ladite partie intermédiaire (308).

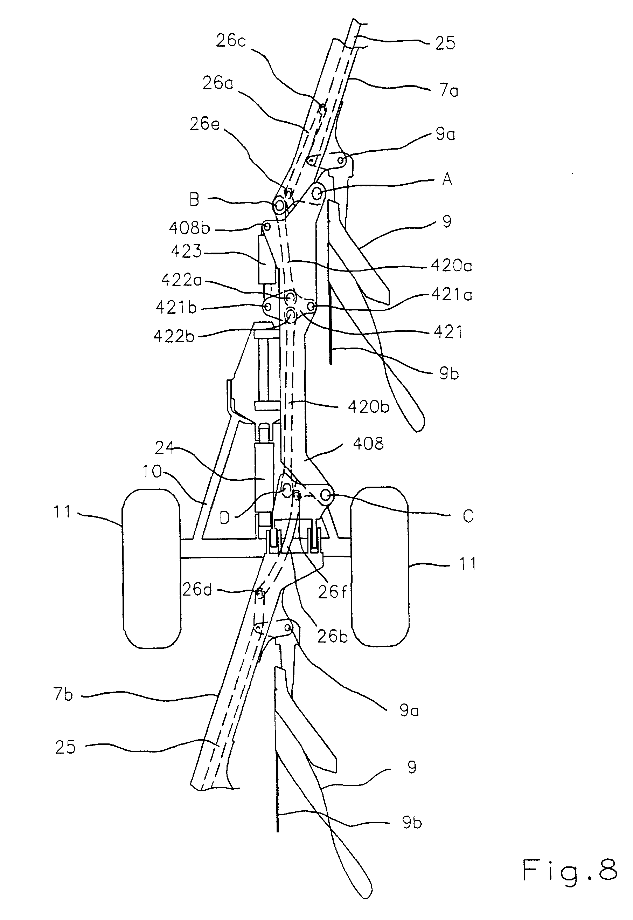

La charrue selon le cinquième exemple de réalisation représentée à la figure 8 présente le vérin hydraulique (423) monté entre la partie intermédiaire (408) et l'organe mobile (421). Ce dernier est donc actionné directement par le vérin hydraulique (423) en un point d'articulation (421b) localisé à l'extrémité de l'organe mobile (421) et à l'extérieur de la partie intermédiaire (408). Cette dernière comporte donc une ouverture ou une fente (non représentée) autorisant le pivotement de l'organe mobile (421), lequel est articulé sur la partie intermédiaire (408) au point d'articulation (421a) situé à l'intérieur de ladite partie intermédiaire (408). Avantageusement, le vérin (423) est articulé sur le côté gauche (en vue de dessus) et à l'avant de la partie intermédiaire (408). L'organe mobile (421) fait, à cet effet, saillie hors de la partie intermédiaire (408) et est montée sur cette dernière en un point d'articulation (421a).

Les longueurs de la première bielle (420a) et de la seconde bielle (420b) sont adaptées en fonction du positionnement de l'organe mobile (421) pivotant et de la dimension de la partie intermédiaire (408). La configuration de la partie intermédiaire (408) est choisie en tenant compte des contraintes d'encombrement et de positionnement des différents éléments nécessaires au réglage de la charrue.

Les exemples de réalisation de la charrue conforme à l'invention et représentés aux figures 2 à 4 et 6 à 8 présentent l'avantage d'actionner ou de déplacer les parties de châssis avant (7a ; 307a) et arrière (7b) grâce à des bras de levier (A - B), (C - D), (21a - 22a), (21a - 22b), (221a - 222), (321a - 322a), (321a - 322b), (421b - 422a) et (421a - 422b). La force susceptible d'être développée par le vérin hydraulique (23 ; 223 ; 323 ; 423) est donc moindre et le dimensionnement dudit vérin hydraulique (23 ; 323 ; 423) est donc choisi en conséquence. Ceci a une incidence favorable sur le prix de revient de la charrue. Il en est de même pour le dimensionnement de la première bielle (20a ; 120a ; 220a 320a ; 420a) et de la seconde bielle (20b ; 120b ; 220b ; 320b ; 420b).

Selon un autre exemple de réalisation d'une charrue conforme à l'invention, chaque corps de labour (9) est orienté individuellement sur la partie (7a ; 307a 7b) du châssis (6) et ce à l'aide de moyens de montage comportant différentes positions prédéterminées de fixation.

Chaque corps de labour (9) est, à titre d'exemple supplémentaire, associé à un vérin hydraulique ou à un manchon réglable pour orienter ledit corps de labour (9) par rapport à la partie (7a ; 307a ; 7b) correspondante.

Un autre avantage de la charrue conforme à l'invention réside dans l'utilisation d'un chariot (10) de largeur relativement réduite entre les roues (11). L'entre-pneus du chariot doit donc rester de préférence relativement faible.

L'écartement des roues (11) est déterminé en fonction d'une part des contraintes liées par exemple au retournement des corps de labour (9) pour une charrue réversible et d'autre part de l'importance des bras de leviers (A - B) et (C - D) que l'on souhaite obtenir. Pour réduire les efforts nécessaires au pivotement des parties avant (7a ; 307a) et arrière (7b), il conviendrait de dimensionner les différentes parties (7a ; 307a ; 7b ; 8 ; 108 ; 208 ; 308 ; 408) de manière à déplacer vers la gauche en vue de dessus, les articulations (B) et (D), et à augmenter les bras de leviers intervenants dans une opération de réglage. Ceci aurait cependant pour conséquence d'augmenter l'encombrement des éléments situés dans l'entre-pneus des roues (11), avec les conséquences négatives mentionnées ci-dessus.

De manière inattendue et avantageuse, il est possible de concilier l'augmentation des bras de levier (A - B ; C - D) et un entre-pneus réduit des roues (11) sur une charrue conforme à l'invention. En effet, l'utilisation de l'organe mobile (21 ; 221 ; 321 ; 421) produit un bras de levier supplémentaire permettant de maintenir l'écartement entre les articulations (A) et (B) ou (C) et (D), dans une plage en deçà des valeurs pour lesquelles l'entre-pneus des roues (11) deviendrait trop important.

Il est en effet souhaitable, en particulier pour terminer le retournement d'une parcelle de ne pas laisser une bande de terre non retournée, ou de réduire au mieux la largeur d'une telle bande. Lorsque la partie arrière (7b) du châssis présente un nombre suffisant de corps de labour (9), la bande de terre, se réduit à la largeur de voie de la roue de jauge (12), le long d'une clôture par exemple.

Lorsque la partie arrière (7b) ne dispose par exemple que de deux corps de labour (9), et qu'elle se trouve dans une position de réglage correspondant à la largeur de travail maximale, il est préférable de retourner complètement l'entre-pneus du chariot (10), ce qui n'est pas le cas dans l'exemple de la figure 1. Ceci permet de laisser une bande de terre non retournée n'excédant pas la largeur de la voie de la roue (11) de gauche (en vue de dessus) du chariot (10). La charrue conforme à l'invention permet de réduire la dimension du chariot (10) et l'écartement des roues (11), de façon à obtenir un tel résultat remarquable et intéressant.

Le résultat par ailleurs n'augmente pas les contraintes auxquelles est soumise la tringlerie de réglage de la charrue conforme à l'invention.

Additionnellement, l'encombrement de la tringlerie nécessaire au réglage de la charrue, reste réduit, ce qui favorise l'intégration de ladite tringlerie, notamment la première bielle (20a ; 120a ; 220a ; 320a ; 420a), la seconde bielle (20b ; 120b ; 220b ; 320b ; 420b) et l'organe mobile (21 ; 121 ; 221 ; 321 ; 421) dans le volume interne de la partie intermédiaire (8 ; 108 ; 208 ; 308 ; 408). Ceci représente un avantage considérable tant au niveau de la sécurité qu'au niveau de la protection des moyens de réglage ou de l'esthétique.

La charrue conforme à l'invention est conçue notamment pour le domaine des charrues réversibles.

Selon un autre mode de réalisation, non représenté aux figures, les bielles complémentaires (26a, 26b) peuvent être remplacées par une forme modifiée de la tige (25). Cette dernière se trouve donc articulée directement aux points (26e, 26f).

Diverses modifications peuvent être apportées aux exemples de réalisation qui sont décrits, notamment en ce qui concerne la constitution des divers éléments ou par substitution d'équivalents techniques sans pour autant sortir du domaine de protection conféré par la présente invention.

On pourra en particulier transposer divers organes de l'un des exemples de réalisation sur les autres exemples de réalisation.

## Revendications

1. Charrue semi-portée ou tractée comportant
- un châssis (6) constitué d'une partie de châssis avant (7a ; 307a) et d'une partie de châssis arrière (7b) sur lesquelles sont montés des corps de labour (9),
- une partie intermédiaire (8 ; 108 ; 208 ; 308 ; 408) articulée entre les parties de châssis avant (7a ; 307a) et arrière (7b) associée à au moins une roue d'appui (11),
- des moyens de réglage pour ajuster l'orientation des parties de châssis avant (7a ; 307a) et arrière (7b) par rapport à la partie intermédiaire (8 ; 108 208 ; 308 ; 408), lesdits moyens de réglage comportant un organe mobile (21 ; 121 ; 221 ; 321; 421) monté sur la partie intermédiaire (8 ; 108 ; 308 ; 408)" et relié à la partie de châssis arrière (7b) avec une seconde bielle (20b ; 120b ; 220b ; 320b ; 420b),
- et des moyens de modification de l'orientation des corps de labour (9) vis-à-vis de la partie de châssis (7a ; 307a ; 7b) correspondante,
***caractérisée en ce* que** les moyens de réglage comprennent une première bielle (20a ; 120a ; 220a ; 320a ; 420a) reliant la partie de châssis avant (7a ; 307a) à l'organe mobile (21 ; 121 ; 221 ; 321 ; 421) dont l'actionnement direct ou indirect permet de déplacer lesdites parties de châssis avant (7a ; 307a) et arrière (7b).

2. Charrue selon la revendication 1, ***caractérisée en ce* que l'organe mobile** (21 : 221 ; 321 ; 421) est constitué d'une pièce pivotante articulée sur la partie intermédiaire (8 ; 208 ; 308 ; 408).

3. Charrue selon la revendication 2, ***caractérisée en ce* que** la pièce pivotante est actionnée sous l'effet d'un vérin hydraulique (23 ; 223 ; 323 ; 423).

4. Charrue selon la revendication 3, ***caractérisée en ce* que** le vérin hydraulique (23 ; 223 ; 423) est articulé entre la partie intermédiaire (8 ; 208 ; 408) et la pièce pivotante.

5. Charrue selon la revendication 3, ***caractérisée en ce* que** le vérin hydraulique (323) est articulé entre la partie intermédiaire (308) et la partie de châssis avant (307a) ou arrière (7b) du châssis (6).

6. Charrue selon la revendication 1, ***caractérisée en ce* que** l'organe mobile (121) est constitué par le piston d'un vérin hydraulique (123).

7. Charrue selon l'une quelconque des revendications 1 à 6, ***caractérisée en ce* que** les moyens de réglage sont montés au moins partiellement à l'intérieur de la partie intermédiaire (8 ; 108 ; 208 ; 308 ; 408).

8. Charrue selon l'une quelconque des revendications 1 à 7, ***caractérisée en ce* que** chaque partie de châssis (7a ; 307a ; 7b) comporte une tige (25) pour réaliser un guidage par parallélogramme des corps de labour (9) sous l'effet d'un moyen de commande, ladite tige (25) et ledit moyen de commande constituant ainsi les moyens de modification de l'orientation desdits corps de labour (9).

9. Charrue selon la revendication 8, ***caractérisée en ce* que** le moyen de commande est constitué par un vérin hydraulique (23 ; 123 ; 223 ; 323 423) ou par un manchon réglable.

10. Charrue selon la revendication 8 ou 9, ***caractérisée en ce* que** chaque tige (25) est reliée à la partie intermédiaire (8 ; 108 ; 208 ; 308 : 408) via une bielle complémentaire (26a, 26b), permettant ainsi d'ajuster automatiquement l'orientation des corps de labour (9), simultanément à un pivotement des parties de châssis avant (7a ; 307a) et arrière (7b) vis-à-vis de la partie intermédiaire (8 ; 108 ; 208 ; 308 ; 408).

11. Charrue selon l'une quelconque des revendications 8 à 10, ***caractérisée en ce* que** le moyen de commande est utilisé pour actionner directement ou indirectement l'organe mobile (21; 121 ; 221 ; 321 ; 421).

12. Charrue selon l'une quelconque des revendications 1 à 7, ***caractérisée en ce* que** chaque corps de labour (9) est orienté individuellement sur la partie de châssis (7a ; 307a ; 7b) correspondante à l'aide de moyens de montage comportant différentes positions prédéterminées de fixation.

13. Charrue selon l'une quelconque des revendications 1 à 7, ***caractérisée en ce* que** chaque corps de charrue (9) est associé à un vérin hydraulique ou à un manchon réglable pour orienter ledit corps de labour par rapport à la partie de châssis (7a ; 307a ; 7b) correspondante.

14. Charrue selon l'une quelconque des revendications 1 à 13, ***caractérisée en ce* qu'**elle constitue une charrue réversible.

## Patentansprüche

1. Aufsattel- oder Anhängepflug, der
- einen Rahmen (6), der aus einem Rahmenvorderteil (7a; 307a) und einem Rahmenhinterteil (7b) besteht, an denen Pflugkörper (9) angebracht sind,
- einen Zwischenteil (8; 108 ; 208; 308; 408), der zwischen dem Rahmenvorderteil (7a; 307a) und dem Rahmenhinterteil (7b) angelenkt und mindestens einem Stützrad (11) zugeordnet ist,
- Einstellmittel zur Einstellung der Ausrichtung des Rahmenvorderteils (7a; 307a) und des Rahmenhinterteils (7b) bezüglich des Zwischenteils (8; 108; 208; 308; 408), wobei die Einstellmittel ein bewegliches Element (21; 121; 221; 321; 421) umfassen, das an dem Zwischenteil (8; 108; 308; 408) angebracht und mit einer zweiten Verbindungsstange (20b; 120b; 220b; 320b; 420b) mit dem Rahmenhinterteil (7b) verbunden ist,
- und Mittel zur Änderung der Ausrichtung der Pflugkörper (9) gegenüber dem entsprechenden Rahmenteil (7a; 307a; 7b),
umfasst,
***dadurch gekennzeichnet*, dass** die Einstellmittel eine erste Verbindungsstange (20a; 120a; 220a; 320a; 420a) umfassen, die den Rahmenvorderteil (7a; 307a) mit dem beweglichen Element (21; 121; 221; 321; 421) verbindet, dessen direkte oder indirekte Betätigung eine Bewegung des Rahmenvorderteils (7a; 307a) und des Rahmenhinterteils (7b) gestattet.

2. Pflug nach Anspruch 1, ***dadurch gekennzeichnet*, dass** das bewegliche Element (21; 221; 321; 421) aus einem Schwenkteil besteht, das an dem Zwischenteil (8; 208; 308; 408) angelenkt ist.

3. Pflug nach Anspruch 2, ***dadurch gekennzeichnet*, dass** der Schwenkteil unter der Wirkung eines Hydraulikzylinders (23; 223; 323; 423) betätigt wird.

4. Pflug nach Anspruch 3, ***dadurch gekennzeichnet*, dass** der Hydraulikzylinder (23; 223; 423) zwischen dem Zwischenteil (8; 208; 408) und dem Schwenkteil angelenkt ist.

5. Pflug nach Anspruch 3, ***dadurch gekennzeichnet*, dass** der Hydraulikzylinder (323) zwischen dem Zwischenteil (308) und dem Rahmenvorderteil (307a) oder Rahmenhinterteil (7b) des Rahmens (6) angelenkt ist.

6. Pflug nach Anspruch 1, ***dadurch gekennzeichnet*, dass** das bewegliche Element (121) durch den Kolben eines Hydraulikzylinders (123) gebildet wird.

7. Pflug nach irgend einem der Ansprüche 1 bis 6, ***dadurch gekennzeichnet,* dass** die Einstellmittel zumindest teilweise im Inneren des Zwischenteils (8; 108; 208; 308; 408) angebracht sind.

8. Pflug nach irgend einem der Ansprüche 1 bis 7, ***dadurch gekennzeichnet,* dass** jeder Rahmenteil (7a; 307a; 7b) eine Stange (25) zur Bewirkung einer Parallelogrammführung der Pflugkörper (9) unter der Wirkung eines Betätigungsmittels aufweist, wobei die Stange (25) und das Betätigungsmittel somit die Mittel zur Änderung der Ausrichtung der Pflugkörper (9) bilden.

9. Pflug nach Anspruch 8, ***dadurch gekennzeichnet*, dass** das Betätigungsmittel durch einen Hydraulikzylinder (23; 123; 223; 323; 423) oder durch eine verstellbare Muffe gebildet wird.

10. Pflug nach Anspruch 8 oder 9, ***dadurch gekennzeichnet*, dass** jede Stange (25) über eine zusätzliche Verbindungsstange (26a, 26b) mit dem Zwischenteil (8; 108; 208; 308; 408) verbunden ist, wodurch die automatische Einstellung der Ausrichtung der Pflugkörper (9) gleichzeitig mit einem Schwenken des Rahmenvorderteils (7a; 307a) und des Rahmenhinterteils (7b) gegenüber dem Zwischenteil (8; 108; 208; 308; 408) gestattet wird.

11. Pflug nach irgend einem der Ansprüche 8 bis 10, ***dadurch gekennzeichnet*, dass** das Betätigungsmittel zur direkten oder indirekten Betätigung des beweglichen Elements (21; 121; 221; 321; 421) verwendet wird.

12. Pflug nach irgend einem der Ansprüche 1 bis 7, ***dadurch gekennzeichnet,* dass** jeder Pflugkörper (9) mittels Montagemittem, die verschiedene, vorbestümnte Befestigungspositionen besitzen, einzeln auf den entsprechenden Rahmenteil (7a; 307a; 7b) ausgerichtet wird.

13. Pflug nach irgend einem der Ansprüche 1 bis 7, ***dadurch gekennzeichnet,* dass** jeder Pflugkörper (9) einem Hydraulikzylinder oder einer verstellbaren Muffe zugeordnet ist, um den Pflugkörper bezüglich des entsprechenden Rahmenteils (7a; 307a; 7b) auszurichten.

14. Pflug nach irgend einem der Ansprüche 1 bis 13, ***dadurch gekennzeichnet*, dass** er einen Wendepflug bildet.

## Claims

1. Semi-mounted or trailed plough comprising:
- a chassis (6) made up of a chassis front part (7a; 307a) and of a chassis rear part (7b) on which plough bodies (9) are mounted,
- an intermediate part (8; 108; 208; 308; 408) articulated between the chassis front part (7a; 307a) and chassis rear part (7b) and associated with at least one landwheel (11),
- adjusting means for adjusting the orientation of the chassis front part (7a; 307a) and chassis rear part (7b) with respect to the intermediate part (8; 108; 308; 408), the said adjusting means comprising a moving element (21; 121; 221; 321; 421) mounted on the intermediate part (8; 108, 308; 408) and connected to the chassis rear part (7b) with a second connecting rod (20b; 120b; 220b; 320b; 420b),
- and means for altering the orientation of the plough bodies (9) with respect to the corresponding chassis part (7a; 307a; 7b),
***characterized in* that** the adjusting means comprise a first connecting rod (20a; 120a; 220a; 320a; 420a) connecting the chassis front part (7a; 307a) to the moving element (21; 121; 221; 321; 421) the direct or indirect actuation of which allows the said chassis front (7a; 307a) and rear (7b) parts to be moved.

2. Plough according to Claim 1, ***characterized in* that** the moving element (21; 221; 321; 421) consists of a pivoting piece articulated to the intermediate part (8; 208; 308; 408).

3. Plough according to Claim 2, ***characterized in* that** the pivoting piece is actuated under the effect of a hydraulic ram (23; 223; 323; 423).

4. Plough according to Claim 3, ***characterized in* that** the hydraulic ram (23; 223; 423) is articulated between the intermediate part (8; 208; 408) and the pivoting piece.

5. Plough according to Claim 3, ***characterized in* that** the hydraulic ram (323) is articulated between the intermediate part (308) and the chassis front (307a) or rear (7b) part of the chassis (6).

6. Plough according to Claim 1, ***characterized in* that** the moving element (121) consists of the piston of a hydraulic ram (123).

7. Plough according to any one of Claims 1 to 6, ***characterized in* that** the adjusting means are mounted at least partially inside the intermediate part (8, 108; 208; 308; 408).

8. Plough according to any one of Claims 1 to 7, ***characterized in* that** each chassis part (7a; 307a; 7b) comprises a rod (25) for providing parallelogram-guidance of the plough bodies (9) under the effect of a control means, the said rod (25) and the said control means thus constituting the means of altering the orientation of the said plough bodies (9).

9. Plough according to Claim 8, ***characterized in* that** the control means consists of a hydraulic ram (23; 123; 223; 323; 423) or an adjustable sleeve.

10. Plough according to Claim 8 or 9, ***characterized in* that** each rod (25) is connected to the intermediate part (8; 108; 208; 308; 408) via an additional connecting rod (26a, 26b), thus allowing the orientation of the plough bodies (9) to be adjusted automatically at the same time as the chassis front (7a; 307a) and rear (7b) parts pivot with respect to the intermediate part (8; 108; 208; 308 ; 408).

11. Plough according to any one of Claims 8 to 10, ***characterized in* that** the control means is used to directly or indirectly actuate the moving element (21; 121; 221; 321; 421).

12. Plough according to any one of Claims 1 to 7, ***characterized in* that** each plough body (9) is orientated individually on the corresponding chassis part (7a; 307a; 7b) using mounting means that have different predetermined attachment positions.

13. Plough according to any one of Claims 1 to 7, ***characterized in* that** each plough body (9) is associated with a hydraulic ram or with an adjustable sleeve for orientating the said plough body with respect to the corresponding chassis part (7a; 307a; 7b).

14. Plough according to any one of Claims 1 to 13, ***characterized in* that** it constitutes a reversible plough.
